# EUROPEAN PATENT SPECIFICATION

(11) **EP 1 888 950 B1**
(45) Date of publication and mention of the grant of the patent: **19.01.2011**
(21) Application number: 06753848.8
(22) Date of filing: 24.05.2006
(51) Int. Cl.: F16J 15/32, B29C 43/18, B29D 99/00

(54) **SEAL AND CORRESPONDING MANUFACTURING METHOD**
DICHTUNG UND ENTSPRECHENDES HERSTELLUNGSVERFAHREN
JOINT D'ETANCHEITE ET SON PROCEDE DE FABRICATION

(30) Priority: 26.05.2005 IT MO20050130
(43) Date of publication of application: 20.02.2008
(60) Divisional application: 10180936.6
(73) Proprietor: Tenute S.r.l., 20124 Milano (IT)
(72) Inventor: RAVANELLI, Raffaello, 20040 Cambiago (MI) (IT); BERTINI, Mario, 20060 Bellinzago Lombardo (MI) (IT)
(74) Representative: Crugnola, Pietro
(86) International application number: PCT/EP2006/004962
(87) International publication number: WO 2006/125627

(56) References cited:
- EP-A- 0 795 702
- CH-A5- 578 137
- FR-A- 1 508 575
- US-A- 3 495 843
- US-A- 4 406 847
- US-A- 4 464 322
- US-A- 4 957 680
- PATENT ABSTRACTS OF JAPAN vol. 010, no. 193 (M-496), 8 July 1986 (1986-07-08) & JP 61 038267 A (KIIPAA KK), 24 February 1986 (1986-02-24)

## Description

The present invention relates to a seal and a method for the manufacture thereof, in particular a seal to be placed between mechanical elements or members that are movable in relation to one another for preventing the leakage of a fluid contained therein and, more in general, to prevent the passage between two contiguous zones of fluid and solid substances such as lubricating and/or refrigerating liquids, impurities, waste, residues and the like.

Seals are known consisting of an annular body made of flexible material and provided with one or more protrusions or end lips intended for abutting on a corresponding friction surface or abutting surface, fixed or movable, for realizing the static or dynamic seal.

In radial seals the sealing lip abuts on the cylindrical surface of a rotating or axially sliding shaft. In the axial or face seal the sealing lip abuts on a flat, fixed or movable surface.

Such seals are generally made of rubber or of another elastomer the composition of which depends on the chemical characteristics of the fluids to be contained, on the mechanical characteristics of the members connected and on operating conditions (temperature, speed, etc).

The elastomeric seals disclosed above have the drawback of having sealing lips that are subject to significant wear, both because of the sliding friction with the abutting surface and because of the overheating that said friction may cause.

The presence of residues, waste, scales, solid fragments in the fluids with which the seal comes into contact, in addition to contributing to wear of the seal, may cause lacerations, cuts, breakage of the latter. This happens for laminating cylinders in which the seals are intended for separating the supporting bearings of the laminating cylinders from the outer environment and for preventing the exit of the lubricating oil and the entry of a cooling fluid that has been greatly contaminated by scales, fragments and metallic residues.

The high wear and possible damages affect the average durability of said seals, which often have to be replaced, with a consequent increase in maintenance costs.

In order to overcome this drawback, seals and corresponding manufacturing methods have been devised that require the use of coatings with self-lubricating materials or materials with a low friction coefficient, for example polytetrafluorethylene (PTFE), to be applied to the entire surface of the seal or only to the most stressed portions, typically the sealing lips.

These coatings form thin films that are applied to the seal with different techniques, for example, by painting at the end of the moulding process or by subsequent gluing and therefore said coatings have small thicknesses, which are generally variable from a few microns to a few tenths of a millimetre.

These coatings, although they have a low friction coefficient and a good wear resistance, due to their small thickness have relatively short operating life, especially in the case of heavy-duty environmental conditions and consequently they do not resolve the problem of the seal durability.

Furthermore, the aforementioned films do not constitute a sufficiently resistant protection barrier for preserving the seal surfaces from possible cuts and lacerations. In addition, these films are subject to partial and total detachments from the seal surface, owing to the process of adhesion or gluing that is not always optimal or reliable. Know injection moulding processes that are usually used for manufacturing seals allow the aforementioned coatings to be applied only at the end of the moulding and vulcanisation processes.

Actually, these moulding processes do not permit to manufacture seals that are provided with coating elements or inserts which are vulcanized integral with the seal.

In injection moulding, suitable drawing units or extruders inject the filler of elastomeric material in fluid state inside a cavity of the mould. This injection occurs at very high pressures that cause very rapid and dynamic movement of the fluid material inside the mould. Any coating elements or inserts that may have been inserted inside the mould to be vulcanised to the elastomeric material might not therefore remain in the correct position but would inevitably be moved, dragged by the motion of the fluid material.

A prior art seal provided with sealing insert formed of a thin sheet of material having a low coefficient of friction is known from e.g. US 3, 495, 843.

An object of the invention is to improve known seals and the corresponding methods for the manufacture thereof, in particular to increase the reliability, resistance and operating durability of said known seals.

Another object is to obtain a seal and a method for the manufacture of said seal provided with sealing means, which are particularly resistant to wear and mechanical stress and therefore which are capable to ensure at the same time optimal static and dynamic seal and long durability, even in adverse operating conditions.

A further object is to obtain a seal that can be manufactured with a relatively simple, economical and reliable method. In a first aspect of the invention a seal is provided in accordance with the features of claim 1.

Owing to this aspect of the invention it is possible to manufacture a seal the sealing means of which, for example one or more lips or end protrusions, is very wear resistant, especially at the contact portion that abuts on the friction surface of a moving mechanical element or member, since said sealing means are provided with coatings consisting of ribbon means. In particular, because of technical features of the material of which the ribbon means are made of, the seal is able to ensure an optimal static and/or dynamic seal and at the same time a long durability even in extremely heavy-duty operating conditions.

In a second aspect not within the scope of the invention, a polytetrafluorethylene (PTFE) ribbon means is provided, **characterised in that** it comprises adhesion promoting means distributed at least on a face of said ribbon means for facilitating the vulcanisation and the fixing thereof to sealing means of a body of a seal. A third aspect not within the scope of the invention provides the use of polytetrafluorethylene ribbon means for coating at least a contact portion of sealing means of a seal, said seal being suitable for being interposed between a first element and a second element, said contact portion being intended abut for abutting on at least a friction surface of said second element.

The use of said ribbon means allows a seal that is particularly reliable, resistant and has a long working durability to be manufactured in a simple and economical way. A fourth aspect not within the scope the invention provides a method for manufacturing a seal, comprising at least a body and sealing means, by using heated mould means that is provided with at least a cavity, comprising introducing filler means inside said cavity, closing said mould means so as to compress said filler means for a time necessary for the melting of said filler means and subsequent vulcanisation thereof for forming at least said body and said sealing means, **characterised in that** said introducing inside said cavity comprises positioning ribbon means at least onto a surface of said cavity intended for forming a contact portion of said sealing means.

Owing to this aspect it is possible to obtain a relatively simple, economical and reliable method for manufacturing a seal provided with ribbon means, which have high wear resistance and a low friction coefficient, and which are integrally fixed to defined contact portions of the seal, typically portions of the sealing means of the seal intended for abutting on friction surfaces of moving mechanical elements or members. Owing to this method it is possible to keep the ribbon means in the desired position inside the mould during the entire moulding and vulcanisation process and obtain a seal that is particularly resistant to wear and mechanical stress and has long durability.

The invention can be better understood and implemented with reference to the enclosed drawings, that show an exemplifying and non-limitative embodiment thereof, in which:
Figure 1 is a partial section view of a seal according to the invention interposed between two elements for carrying out a seal of radial type;
Figure 2 is a partial section view of a version of the seal in Figure 1 interposed between two elements for carrying out a seal of face type;
Figures 3 to 7 illustrate partial section views of versions of the seal in Figure 1;
Figure 8 illustrates a partial section view of mould means containing filler means, ribbon means and supporting means in rubberised fabric for manufacturing a seal according to the invention;
Figure 9 illustrates a partial section view of the mould means of Figure 8 containing filler means, ribbon means and steel supporting means for manufacturing a version of the seal according to the invention.

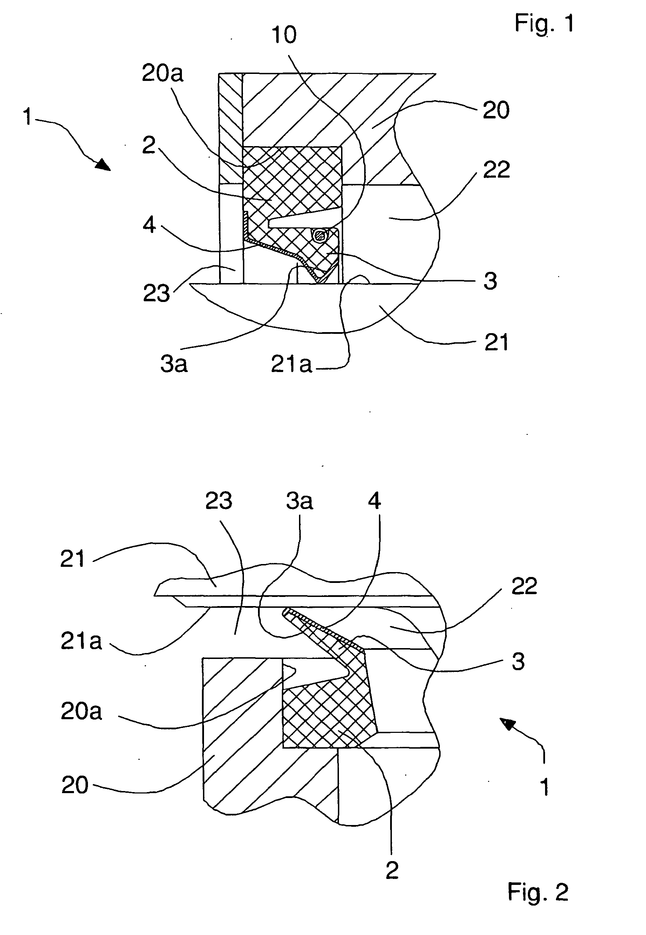

With reference to Figure 1, numeral 1 indicates a seal that is suitable for being interposed at least between a first element 20 and a second element 21 and substantially comprising a body 2 and sealing means 3. The latter has at least a contact portion 3a intended for abutting on a friction surface 21a of the second element 21 to ensure the seal between an external zone 23 and an internal zone 22 that are contiguous, i.e. to prevent the passage of fluid and solid substances such as lubricating and/or refrigerating liquids, waste, residues and the like.

The seal 1 comprises ribbon means 4 having high wear resistance and a low friction coefficient, fixed to the sealing means 3 so as to coat at least the contact portion 3a of the latter.

In the embodiment shown in Figure 1, the body 2 of the seal 1 has an annular shape and the sealing means 3 comprises a sealing lip of circular shape, the contact portion 3a of which is coated by the ribbon means 4 and abuts on the friction surface 21a.

In particular, the body 2 is inserted into a cylindrical seat 20a of a support or bearing 20 and the sealing lip 3 abuts radially on the cylindrical surface 21a of a shaft or pin 21, for example rotating, so as to realise a seal of radial type. Alternatively, the seal 1 can be fixed to the fixed or rotating shaft, and in this case the body 2 will be inserted into a suitable seat of said shaft and the sealing lip 3 will abut radially on the cylindrical surface of a support or bearing.

The seal may comprise elastic means, consisting, for example, of a spiral spring 10 inserted into a suitable seat of the sealing lip 3 to keep the latter abutting on the friction surface 21a of the shaft 21 during use.

The body 2 and the sealing means 3 are made of elastomer, for example a thermosetting polymer which is suitably crosslinked or vulcanised.

The ribbon means 4 has a flat and elongated shape with a thickness comprised between 0.3 and 1 mm, preferably 0.5 mm, and width variable according to specific requirements.

The ribbon means 4 is for example made of a fluorinated polymer, in particular virgin or filled polytetrafluorethylene (PTFE), i.e. containing filler elements of various nature such as glass fibre, carbon, graphite, stainless steel, bronze, nickel, ceramics, etc. The type and the quantity of filler elements to be added depends on the mechanical and chemical properties that are desired in the PTFE and on the features of the materials with which said PTFE will come into contact during use.

The various filler elements added to the composition of the PTFE enable some features thereof to be improved, for example they can increase the wear resistance, the thermal conductivity, the creep strength and reduce the friction coefficient.

The ribbon means 4 is integral with the sealing means 3 as it is fixed by curing the latter during the vulcanising process of the seal 1.

The ribbon means 4 is substantially obtained from a flat semifinished product or ribbon in virgin or filled PTFE, that is of known type and commercially available for example a ribbon of filled and hardened PTFE of the type generally used for coating the sliding bars of the machine tools. The ribbon means 4 can be cut according to the type and the dimensions of the seal to be obtained therefrom, for example, from a roll or reel of ribbon of appropriate width.

In the case of annular seals, the cut ribbon means 4 is subsequently joined, for example during vulcanisation, to form a closed ring. Before being joined, the ribbon means can be shaped, for example by calendaring, to assume a conical surface that is complementary to that of the contact portion 3a of the sealing lip 3. Alternatively, but not within the scope of the invention the ribbon means 4 may consist of a washer or entire flat ring of appropriate dimensions, which can be suitably calendared.

In order to ensure optimal adhesion of the ribbon means 4 to the sealing means 3 during the moulding process and the vulcanisation process of the seal 1, applying adhesion promoting means to at least a surface 4b of said ribbon means 4 is provided, which surface 4b is intended for adhering to the contact portion 3a of the sealing lip 3. The adhesion promoting means consists substantially of an adhesion promoting agent, for example a primer paint, of the type commonly used for fixing and adhering of metal materials with smooth and compact surfaces to an elastomeric material during vulcanisation of the latter. The primer paint is thus applied to the ribbon means 4 before the ribbon means 4 is positioned in the cavity of the mould for subsequent moulding and vulcanisation.

Figure 2 illustrates a version of the seal 1, in which the annular-shaped body 2 is fixed to a seat 20a of a bearing 20 and the sealing lip 3, provided with ribbon means 4, abuts on a flat surface 21a of a shaft 21, to realise a seal of the face type. Alternatively, the seal 1 may be fixed to the shaft, the body 2 being inserted into a suitable seat of said shaft and the sealing lip 3 abutting on a flat surface of the support.

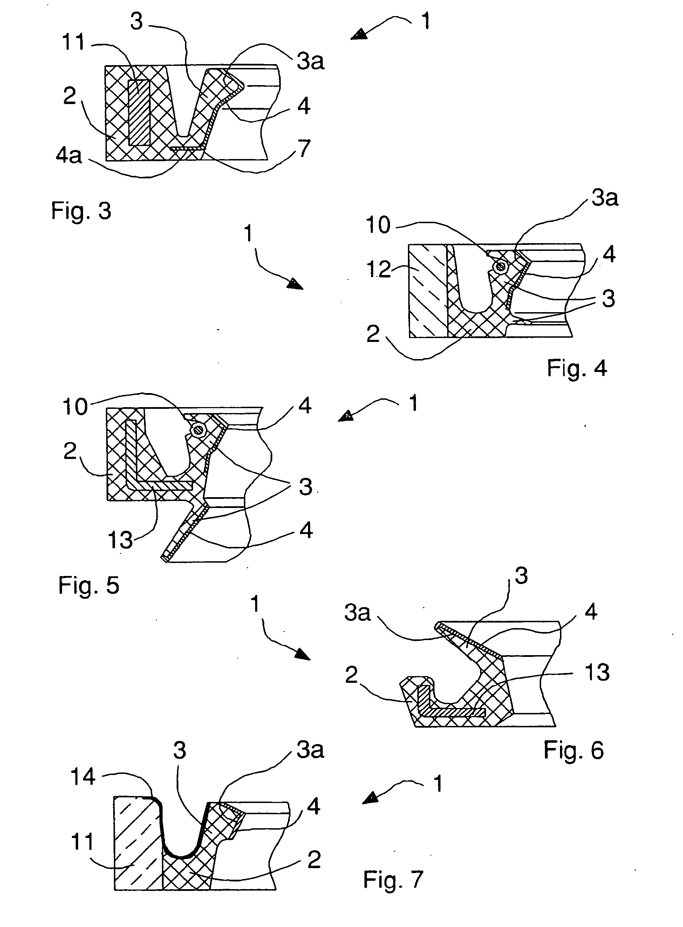

The further version illustrated in Figure 3 differs from the embodiment in Figure 1 as the ribbon means 4 has an end portion 4a intended for being inserted inside the body 2. This solution avoids and noticeably reduces any formation of slits or cracks on the surface of the seal 1 at a superficial joint zone 7 between the ribbon means 4 and the sealing lip 3, particularly if said sealing lip 3 is very flexible and repeatedly bending stressed during use of the seal.

This version of the seal 1 furthermore comprises first supporting means 11 incorporated into the body 2 intended for reinforcing and keeping the latter abutting on the seat 20a of the bearing 20. This supporting means 11 consists, for example, of elements of raw steel or of composite material, such as glass fibre (VTR), cotton added with resin, etc.

Figure 4 illustrates another version of the seal 1 for a radial seal in which second supporting means 12 is provided fixed to the body 2 and consisting of a rubberised fabric ring or other similar material for forming a supporting shoulder or back for the seal. The sealing means 3 comprises two distinct sealing lips, the first of which is intended for ensuring the seal and is provided with ribbon means 4, the second acting as a scraping element and devoid of ribbon means 4.

Figure 5 illustrates a version of the seal for radial and face seal, which differs from the seal in Figure 4 by the fact that the sealing lips of the sealing means 3 both have ribbon means 4 fixed to the contact portions. Third supporting means 13 incorporated into the body 2 consists of a metal ring, for example of carbon steel having an L-shaped cross section suitable for stiffening the body 2 and in the meantime strengthening the connecting portion thereof with the sealing means 3.

Figure 6 illustrates a further version of the seal 1 for face seal that differs from the seal in Figure 2 through the fact of being provided with supporting means 13 incorporated into the body 2 and consisting of a metal ring with an L-shaped cross section.

In Figure 7 is illustrated another version of the seal 1 for a radial seal, comprising second supporting means 12, consisting of a rubberised fabric ring, to which elastic means 14 is fixed consisting of a finger spring, to which the body 2 and the sealing means 3 of the seal are vulcanised. The sealing means 3 comprises a lip provided with ribbon means 4 that during operation is kept abutting on the friction surface 21a by the comb spring 14.

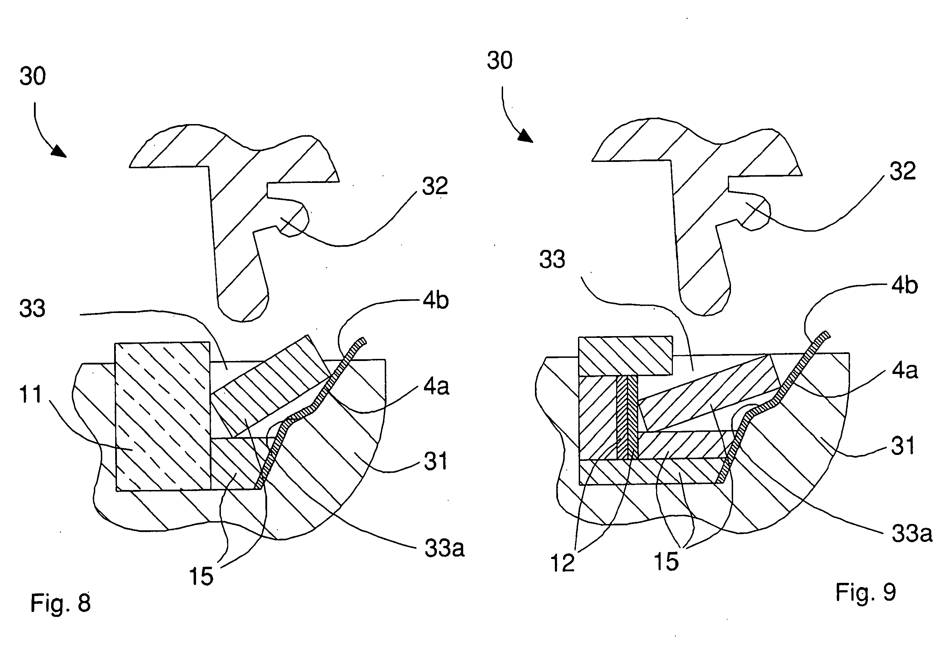

It is clear that the object of the present invention can be extended to numerous seals of known type, for example lip seals for rotary or linear movements, oil-seals and stem scraper rings, static seals, the invention it self being limited by the scope of the appended claims. Figure 8 illustrates a step of the method for manufacturing a seal 1 according to the invention, through compression moulding i.e. by using heated mould means 30, provided with a cavity 33 suitable for housing filler means 15 consisting of a plurality of elements, for example of elastomeric material, suitable for being melted, compressed and vulcanised to form the body 2 and the sealing means 3 of said seal 1.

In particular, the mould means 30 comprises a first shell 31 provided with the cavity 33, said female, and a second shell 32, said male, provided with a shaped portion.

The method provides for introducing into the cavity 33 the filler elements 15 and closing the mould means 30 so as to compress said elements 15 for a time necessary for the melting thereof and subsequent vulcanisation. Before introducing the filler elements 15 positioning ribbon means 4 on a surface 33a of said cavity 33 is provided, said surface 33a being intended for forming a contact portion 3a of the sealing means 3 of the seal 1. More precisely, said ribbon means 4 lays and to adhere to the surface 33a.

Before positioning the ribbon means 4 in the cavity 33, applying suitable adhesion promoting means to a face 4b of said ribbon means 4 intended for contacting the filler means 15 is provided. The adhesion promoting means enables the filler means 15 to adhere firmly to the ribbon means 4 during vulcanisation.

The filler elements 15 are inserted and positioned in the cavity 33 so as to correctly fill, once melted, the exact volume of the cavity 33 and so that the filler elements 15 fit into one another or at least position to one another reciprocally in a definitive way, above all for locking or keeping in position the ribbon means 4. For this purpose the filler elements 15 are suitably dimensioned and shaped in function of the cavity 33 into which they are inserted. Typically, the filler elements 15 have the shape of thin strips with a rectangular section arranged in layers.

The ribbon means 4 is obtained from a strip of semimanufactured PTFE that is suitably cut and possibly shaped to adhere to the surface 33a, and to be complementary thereto.

In the case of a seal 1 of annular shape, joining the edges of the ribbon means 4 is provided to obtain a closed ring. Alternatively but outside the scope of the invention, the ribbon means 4 may comprise a washer or entire flat ring of appropriate dimensions.

Introducing into the cavity 33 the supporting means 11, 12, 13 and the elastic means 14 suitable for being incorporated or fixed to the body 2 of the seal is furthermore provided. The supporting means consists, for example, of one or more rubberised fabric rings 12 or of metal rings 11, 13 and is intended for stiffening the body 2 of the seal and for keeping the latter abutting on a seat 20a of the first element 20.

The elastic means 14 may comprise a finger spring inserted into the mould suitable for keeping the sealing means 3 abutting on a friction surface 21a of a second element 21. The compression-moulding of the seal can be achieved in two or more steps, above all in the case of ribbons of significant dimensions.

By example, an initial first premoulding step can be provided for melting, joining and compressing the filler elements 15 that are into a cavity portion 33 adjacent to the ribbon means 4 and in such a way enabling the filler melted elastomeric material thus obtained to adhere to said ribbon means 4.

In a subsequent step, remaining filler elements 15 can be introduced, said filler elements 15 melting to completely fill the cavity 33 and, for example, incorporating or adhering to the supporting means 11, 12, 13 and/or to the elastic means 14 that may be present. In this subsequent step, in addition to the complete melting and joining of the filler elements 15, the polymerisation or cross linkage process thereof is completed.

## Claims

1. Seal suitable for being interposed at least between a first element (20) and a second element (21), comprising at least a**n annular** body (2) and sealing means (3) provided with at least a contact portion (3a) suitable for abutting on a friction surface (21a) of said second element (21), coating means (4) having at least high wear resistant and a low friction coefficient, said coating means (4) being fixed to said contact portion (3a) of said sealing means (3), **characterised in that said coating means consist of ribbon means (4) having edges that are joined to obtain a closed ring.**

2. Seal according to claim 1, wherein said body (2), said sealing means (3) and said ribbon means (4) are an enbloc.

3. Seal according to any preceding claim, wherein said body (2) and said sealing means (3) are made of an elastomeric material.

4. Seal according to any preceding claim, wherein said ribbon means (4) are made of virgin and/or filled polytetrafluorethylene.

5. Seal according to any preceding claim, wherein said ribbon means (4) has a thickness comprised between 0.3 and 1 mm.

6. Seal according to any preceding claim, wherein said sealing means (3) comprises at least a sealing lip.

7. Seal according to any preceding claim, wherein an end portion (4a) of said ribbon means (4) is inserted inside the body (2).

8. Seal according to any preceding claim, comprising elastic means (10, 14) suitable for keeping said sealing means (3) abutting on the friction surface (21a).

9. Seal according to any preceding claim, comprising supporting means (11; 12; 13) fixed to said body (2) and suitable at least for stiffening said body (2).

10. Seal according to claim **9,** wherein said supporting means (11; 13) is incorporated into the body (2).

11. Seal according to any one of claims **8 to 10,** wherein said elastic means (14) is fixed to said body (2) and to said sealing means (3) for keeping the latter abutting on said friction surface (21a).

12. Seal according to any one of claims **9 to 11,** as claim **9** is appended to claim **8,** wherein said supporting means (11; 12; 13) and said elastic means (14) are vulcanised to the body (2).

## Patentansprüche

1. Dichtung, die geeignet ist, um zumindest zwischen ein erstes Element (20) und ein zweites Element (21) eingefügt zu werden, mit mindestens einem ringförmigen Körper (2) und einer Dichtungseinrichtung (3), die mit mindestens einem Kontaktteil (3a) versehen ist, der zum Anlegen an eine Reibungsfläche (21 a) des zweiten Elements (21) geeignet ist, einer Beschichtungseinrichtung (4) mit zumindest einer hohen Verschleißbeständigkeit und einem niedrigen Reibungskoeffizienten, wobei die Beschichtungseinrichtung (4) an dem Kontaktteil (3a) der Dichtungseinrichtung (3) befestigt ist, **dadurch gekennzeichnet, dass** die Beschichtungseinrichtung aus einer Bandeinrichtung (4) mit Kanten besteht, die verbunden sind, um einen geschlossenen Ring zu erhalten.

2. Dichtung nach Anspruch 1, wobei der Körper (2), die Dichtungseinrichtung (3) und die Bandeinrichtung (4) einteilig sind.

3. Dichtung nach einem vorangehenden Anspruch, wobei der Körper (2) und die Dichtungseinrichtung (3) aus einem elastomeren Material bestehen.

4. Dichtung nach einem vorangehenden Anspruch, wobei die Bandeinrichtung (4) aus unberührtem und/oder gefülltem Polytetrafluorethylen besteht.

5. Dichtung nach einem vorangehenden Anspruch, wobei die Bandeinrichtung (4) eine Dicke aufweist, die zwischen 0,3 und 1 mm liegt.

6. Dichtung nach einem vorangehenden Anspruch, wobei die Dichtungseinrichtung (3) mindestens eine Dichtungslippe umfasst.

7. Dichtung nach einem vorangehenden Anspruch, wobei ein Endteil (4a) der Bandeinrichtung (4) in den Körper (2) eingesetzt ist.

8. Dichtung nach einem vorangehenden Anspruch mit einer elastischen Einrichtung (10, 14), die geeignet ist, um die Dichtungseinrichtung (3) in Anlage an der Reibungsfläche (21 a) zu halten.

9. Dichtung nach einem vorangehenden Anspruch mit einer Stützeinrichtung (11; 12; 13), die an dem Körper (2) befestigt ist und zumindest zum Versteifen des Körpers (2) geeignet ist.

10. Dichtung nach Anspruch 9, wobei die Stützeinrichtung (11; 13) in den Körper (2) integriert ist.

11. Dichtung nach einem der Ansprüche 8 bis 10, wobei die elastische Einrichtung (14) an dem Körper (2) und an der Dichtungseinrichtung (3) befestigt ist, um die letztere in Anlage an der Reibungsfläche (21 a) zu halten.

12. Dichtung nach einem der Ansprüche 9 bis 11, wenn Anspruch 9 an Anspruch 8 angehängt ist, wobei die Stützeinrichtung (11; 12; 13) und die elastische Einrichtung (14) an den Körper (2) vulkanisiert sind.

## Revendications

1. Joint adapté pour être intercalé au moins entre un premier élément (20) et un second élément (21), comprenant au moins un corps annulaire (2) et des moyens d'étanchéité (3) munis d'au moins une partie de contact (3a) adaptée pour venir en butée sur une surface de frottement (21a) dudit second élément (21), des moyens de revêtement (4) ayant au moins une résistance élevée à l'usure et un faible coefficient de frottement, lesdits moyens de revêtement (4) étant fixés à ladite partie de contact (3a) desdits moyens d'étanchéité (3), **caractérisé en ce que** lesdits moyens de revêtement sont constitués de moyens de ruban (4) ayant des bords qui sont réunis pour obtenir un anneau fermé.

2. Joint selon la revendication 1, dans lequel ledit corps (2), lesdits moyens d'étanchéité (3) et lesdits moyens de ruban (4) sont monoblocs.

3. Joint selon l'une quelconque des revendications précédentes, dans lequel ledit corps (2) et lesdits moyens d'étanchéité (3) sont constitués d'un matériau élastomère.

4. Joint selon l'une quelconque des revendications précédentes, dans lequel lesdits moyens de ruban (4) sont constitués de polytétrafluoroéthylène vierge et/ou chargé.

5. Joint selon l'une quelconque des revendications précédentes, dans lequel lesdits moyens de ruban (4) ont une épaisseur comprise entre 0,3 et 1 mm.

6. Joint selon l'une quelconque des revendications précédentes, dans lequel lesdits moyens d'étanchéité (3) comprennent au moins une lèvre d'étanchéité.

7. Joint selon l'une quelconque des revendications précédentes, dans lequel une partie d'extrémité (4a) desdits moyens de ruban (4) est insérée à l'intérieur du corps (2).

8. Joint selon l'une quelconque des revendications précédentes, comprenant des moyens élastiques (10, 14) adaptés pour maintenir lesdits moyens d'étanchéité (3) en butée sur la surface de frottement (21a).

9. Joint selon l'une quelconque des revendications précédentes, comprenant des moyens de support (11 ; 12 ; 13) fixés audit corps (2) et adaptés au moins pour raidir ledit corps (2).

10. Joint selon la revendication 9, dans lequel lesdits moyens de support (11 ; 13) sont incorporés dans le corps (2).

11. Joint selon l'une quelconque des revendications 8 à 10, dans lequel lesdits moyens élastiques (14) sont fixés audit corps (2) et auxdits moyens d'étanchéité (3) pour maintenir ces derniers en butée sur ladite surface de frottement (21a).

12. Joint selon l'une quelconque des revendications 9 à 11, lorsque la revendication 9 est rattachée à la revendication 8, dans lequel lesdits moyens de support (11 ; 12 ; 13) et lesdits moyens élastiques (14) sont vulcanisés sur le corps (2).
